# EUROPEAN PATENT APPLICATION

(11) **EP 4 700 379 A1**
(43) Date of publication of application: **25.02.2026**
(21) Application number: 25195508.4
(22) Date of filing: 12.08.2025
(51) Int. Cl.: G01N 23/2204, G01N 23/223

(54) **SAMPLE CONTAINER, FLUORESCENT X-RAY ANALYZER, AND MEASUREMENT METHOD**

(30) Priority: 23.08.2024 JP 2024143418
(71) Applicant: Jeol Ltd., Akishima, Tokyo 196-8558 (JP)
(72) Inventor: ASAMI, Kotaro, Tokyo, 196-8558 (JP); KINUGASA, Genki, Tokyo, 196-8558 (JP); MURAYA, Naoki, Tokyo, 196-8558 (JP)
(74) Representative: Boult Wade Tennant LLP

(57) **Abstract**

A sample container (100) for a fluorescent X-ray analyzer, the sample container (100) includes: a first receptacle (10) that accommodates a liquid sample (S) and has a first opening (4a) and a second opening (4b); an analytical film (20) that closes off the first opening (4a) and transmits X-rays; a protective receptacle (40) that includes a protective film (44) for transmitting X-rays and covers the analytical film (20); and a pressure adjustment valve (60) that adjusts a pressure inside the first receptacle (10), wherein the first receptacle (10) has a first space (2a) facing the first opening (4a), a second space (2b) facing the second opening (4b), and a connection hole (2c) connecting the first space (2a) and the second space (2b), and wherein a cross-sectional area of the connection hole (2c) is smaller than an area of the first opening (2a).

## Description

### BACKGROUND OF THE INVENTION

### Field of the Invention

The present invention relates to a sample container, a fluorescent X-ray analyzer, and a measurement method.

### Description of Related Art

In a fluorescent X-ray analyzer, a sample is irradiated with primary X-rays from an X-ray tube and secondary X-rays emitted from the sample are detected by a detector, and thus it is possible to perform qualitative and quantitative analysis, and the like.

When analyzing light elements in a liquid in fluorescent X-ray analysis, a sample chamber is filled with helium gas, and measurement is performed. However, in order to fill the sample chamber with helium gas, a mechanism for filling the sample chamber with helium gas is required. In addition, equipment for managing the highpressure helium gas is required.

In response to this, JP 2024-000191 A discloses a sample container that can maintain a pressure inside the container in a vacuum atmosphere sample chamber higher than the pressure at which a liquid sample boils and lower than the pressure at which an analytical film is damaged. By using this sample container, the sample chamber in the fluorescent X-ray analyzer can be placed in a vacuum atmosphere for measurement, allowing light elements in a liquid sample to be measured without filling the sample chamber with helium.

In a sample container disclosed in JP 2024-000191 A, an opening of a cylindrical sample cup is closed off with an analytical film and a liquid sample is accommodated in the sample cup. By increasing the area of the opening of the sample cup, a region irradiated by X-rays can be enlarged.

When the area of the opening of the sample cup is increased, the analytical film becomes more susceptible to damage due to a pressure difference between the inside and outside of the container. For this reason, the sample container disclosed in JP 2024-000191 A is equipped with a protective receptacle including a protective film that transmits X-rays, and even when the analytical film is damaged and the liquid sample leaks out, the protective receptacle can receive the liquid sample. Thereby, it is possible to prevent the liquid sample from getting onto the fluorescent X-ray analyzer.

However, in the sample container disclosed in JP 2024-000191 A, when the analytical film is damaged due to a pressure difference between the inside and outside of the container, the liquid sample and gas inside the container may be forcefully ejected, damaging the protective film.

### SUMMARY OF THE INVENTION

According to a first aspect of the present disclosure, there is provided a sample container for a fluorescent X-ray analyzer, the sample container including:
a first receptacle that accommodates a liquid sample and has a first opening and a second opening;
an analytical film that closes off the first opening and transmits X-rays;
a protective receptacle that includes a protective film for transmitting X-rays and covers the analytical film; and
a pressure adjustment valve that adjusts a pressure inside the first receptacle,
wherein the first receptacle has a first space facing the first opening, a second space facing the second opening, and a connection hole connecting the first space and the second space, and
wherein a cross-sectional area of the connection hole is smaller than an area of the first opening.

According to a second aspect of the present disclosure, there is provided a fluorescent X-ray analyzer including:
the above-described sample container; and
a sample chamber that accommodates the sample container and is able to be maintained in a vacuum atmosphere,
wherein measurement is performed by irradiating the liquid sample accommodated in the sample container with X-rays in the sample chamber in a vacuum atmosphere.
According to a third aspect of the present disclosure, there is provided a measurement method using a sample container including
a first receptacle that accommodates a liquid sample and has a first opening and a second opening,
an analytical film that closes off the first opening and transmits X-rays,
a protective receptacle that includes a protective film for transmitting X-rays and covers the analytical film, and
a pressure adjustment valve that adjusts a pressure inside the first receptacle,
wherein the first receptacle has a first space facing the first opening, a second space facing the second opening, and a connection hole connecting the first space and the second space, and
wherein a cross-sectional area of the connection hole is smaller than an area of the first opening, the measurement method including:
   accommodating the liquid sample in the sample container;
   introducing the sample container into a sample chamber of a fluorescent X-ray analyzer;
   reducing a pressure in the sample chamber to place the sample chamber in a vacuum atmosphere; and
   irradiating the liquid sample accommodated in the sample container with X-rays through the analytical film and the protective film in the sample chamber in a vacuum atmosphere, and detecting fluorescent X-rays emitted from the liquid sample.

### BRIEF DESCRIPTION OF THE DRAWINGS

FIG. 1 is a cross-sectional view schematically illustrating a sample container according to the first embodiment.
FIG. 2 is a cross-sectional view schematically illustrating a first receptacle.
FIG. 3 is a diagram illustrating a pressure adjustment valve.
FIG. 4 is a diagram illustrating an example of a configuration of a fluorescent X-ray analyzer.
FIG. 5 is a flowchart illustrating an example of a measurement method using a sample container.
FIG. 6 is a diagram illustrating a step of a measurement method using a sample container.
FIG. 7 is a diagram illustrating a step of a measurement method using a sample container.
FIG. 8 is a diagram illustrating a step of a measurement method using a sample container.
FIG. 9 is a diagram illustrating a step of a measurement method using a sample container.
FIG. 10 is a diagram illustrating a step of a measurement method using a sample container.
FIG. 11 is a diagram schematically illustrating a state of a sample container in a sample chamber in a vacuum state.
FIG. 12 is a diagram for explaining a fluorescent X-ray analyzer in a state in which an analytical film is damaged.
FIG. 13 is a cross-sectional view schematically illustrating a sample container according to the second embodiment.
FIG. 14 is a cross-sectional view schematically illustrating a first receptacle.
FIG. 15 is a cross-sectional view schematically illustrating a sample container according to the third embodiment.

### DESCRIPTION OF THE INVENTION

According to an embodiment of the present disclosure, there is provided a sample container for a fluorescent X-ray analyzer, the sample container including:
a first receptacle that accommodates a liquid sample and has a first opening and a second opening;
an analytical film that closes off the first opening and transmits X-rays;
a protective receptacle that includes a protective film for transmitting X-rays and covers the analytical film; and
a pressure adjustment valve that adjusts a pressure inside the first receptacle,
wherein the first receptacle has a first space facing the first opening, a second space facing the second opening, and a connection hole connecting the first space and the second space, and
wherein a cross-sectional area of the connection hole is smaller than an area of the first opening.

In such a sample container, the cross-sectional area of the connection hole is smaller than the area of the first opening, and thus flow rates of the liquid sample and gas flowing from the second space to the first space can be restricted. Thus, in such a sample container, it is possible to reduce the possibility of the protective film being damaged when the analytical film is damaged. Thereby, the liquid sample can be safely measured in the fluorescent X-ray analyzer.

According to an embodiment of the present disclosure, there is provided a fluorescent X-ray analyzer including:
the above-described sample container; and
a sample chamber that accommodates the sample container and is able to be maintained in a vacuum atmosphere,
wherein measurement is performed by irradiating the liquid sample accommodated in the sample container with X-rays in the sample chamber in a vacuum atmosphere.

In such a fluorescent X-ray analyzer, the liquid sample is measured using the above-mentioned sample container, and thus the liquid sample can be measured safely. Further, in such a fluorescent X-ray analyzer, the sample chamber can be placed in a vacuum atmosphere for measurement, and thus light elements in the liquid sample can be measured without filling the sample chamber with helium.

According to an embodiment of the present disclosure, there is provided a measurement method using a sample container including
a first receptacle that accommodates a liquid sample and has a first opening and a second opening,
an analytical film that closes off the first opening and transmits X-rays,
a protective receptacle that includes a protective film for transmitting X-rays and covers the analytical film, and
a pressure adjustment valve that adjusts a pressure inside the first receptacle,
wherein the first receptacle has a first space facing the first opening, a second space facing the second opening, and a connection hole connecting the first space and the second space, and
wherein a cross-sectional area of the connection hole is smaller than an area of the first opening, the measurement method including:
   accommodating the liquid sample in the sample container;
   introducing the sample container into a sample chamber of a fluorescent X-ray analyzer;
   reducing a pressure in the sample chamber to place the sample chamber in a vacuum atmosphere; and
   irradiating the liquid sample accommodated in the sample container with X-rays through the analytical film and the protective film in the sample chamber in a vacuum atmosphere, and detecting fluorescent X-rays emitted from the liquid sample.

In such a measurement method, the liquid sample is measured using the above-mentioned sample container, and thus the liquid sample can be measured safely. In addition, since the sample chamber can be placed in a vacuum atmosphere for measurement, light elements in the liquid sample can be measured without filling the sample chamber with helium.

Now preferred embodiments of the present invention will be described in detail below with reference to the drawings. The embodiments described below are not intended to unduly limit the contents of the present invention described in the claims. Further, all of the components described below are not necessarily essential requirements of the present invention.

### 1. First Embodiment

### 1.1. Sample Container

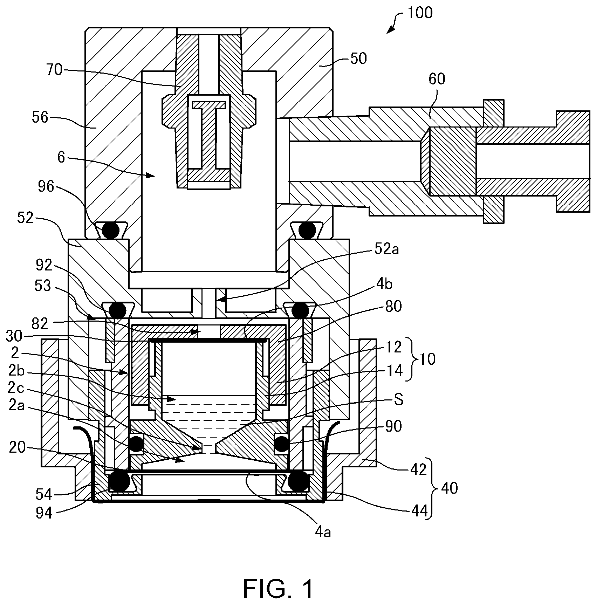

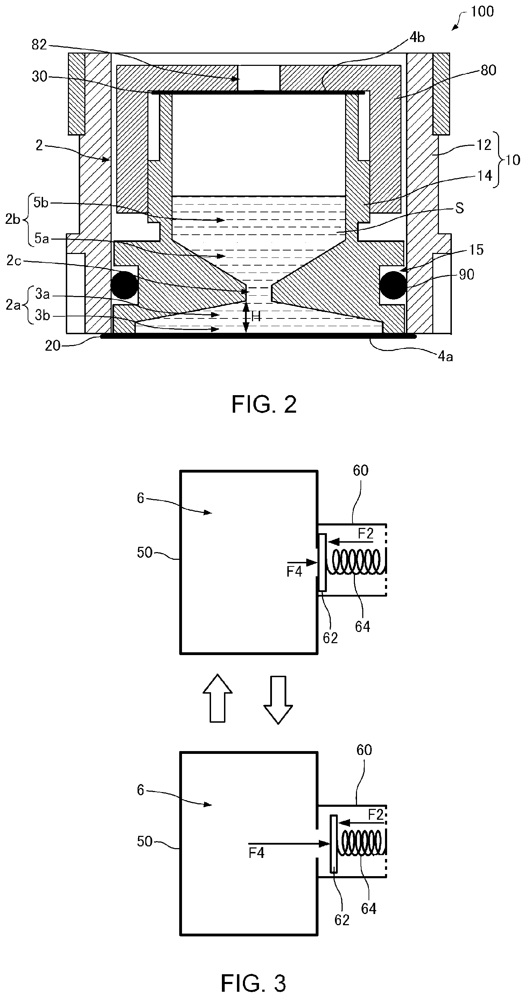

First, a sample container according to a first embodiment will be described with reference to the drawings. FIG. 1 is a cross-sectional view schematically illustrating a sample container 100 according to the first embodiment. FIG. 1 illustrates a state in which a second receptacle 50 is attached to a first receptacle 10. FIG. 2 is a cross-sectional view schematically illustrating the first receptacle 10.

The sample container 100 is a sample container for a fluorescent X-ray analyzer. The sample container 100 is a container for measuring a liquid sample S in a sample chamber in a vacuum atmosphere.

As illustrated in FIGS. 1 and 2, the sample container 100 includes the first receptacle 10, an analytical film 20, a porous film 30, a protective receptacle 40, a second receptacle 50, a pressure adjustment valve 60, and a leak valve 70.

The first receptacle 10 accommodates the liquid sample S to be measured. The liquid sample S to be measured is, for example, sustenance such as drinking water, a cleaning liquid such as an organic solvent, alcohol such as ethanol, oil, a plating liquid, an electrolyte used in batteries, liquid fertilizer, water for water quality investigation, and the like. The first receptacle 10 includes a first space 2a, a second space 2b, and a connection hole 2c connecting the first space 2a and the second space 2b. The first receptacle 10 includes a first opening 4a that is closed off by the analytical film 20, and a second opening 4b that is closed off by the porous film 30.

The first receptacle 10 includes a sample cup 12 and a damper 14 (an example of a partition member). The sample cup 12 is, for example, cylindrical. The damper 14 is disposed within the sample cup 12. The damper 14 is a partition member that partitions the space within the sample cup 12. The damper 14 partitions a space 2 within the sample cup 12 to form the first space 2a, the second space 2b, and the connection hole 2c.

The first space 2a faces the first opening 4a. The first space 2a is filled with the amount of liquid sample S required for measurement. A height H of the first space 2a, that is, a distance between the first opening 4a and the connection hole 2c, is greater than an analysis depth of X-ray fluorescence analysis. The height H of the first space 2a is, for example, approximately 1 mm or more and 3 mm or less. Thereby, the first space 2a can be filled with the liquid sample S to a depth required for measurement.

The first space 2a has a tapered portion 3a whose cross-sectional area decreases toward the tip. The shape of the tapered portion 3a is a truncated cone. The tip of the tapered portion 3a is connected to the connection hole 2c. In the illustrated example, the first space 2a has the tapered portion 3a and a cylindrical portion 3b, the tip of the tapered portion 3a is connected to the connection hole 2c, and the rear end of the tapered portion 3a is connected to one end of the cylindrical portion 3b. In addition, the other end of the cylindrical portion 3b configures the first opening 4a. The cross-sectional area of the cylindrical portion 3b is larger than the cross-sectional area of the connection hole 2c.

The second space 2b faces the second opening 4b. The second space 2b functions as a buffer tank that contains the liquid sample S to be supplied to the first space 2a. The volume of the second space 2b is, for example, larger than the volume of the first space 2a. Although not shown in the drawing, the volume of the second space 2b may be smaller than the volume of the first space 2a, or the volume of the second space 2b may be the same as the volume of the first space 2a. Here, when the analytical film 20 expands outward due to a pressure difference between the inside of the first receptacle 10 and the sample chamber, the volume of the first space 2a increases. For this reason, the volume of the second space 2b only needs to be a volume that can fill the first space 2a with an amount of buffer liquid that can replenish the liquid sample S by the volume of the first space 2a increased by the expansion of the analytical film 20.

The second space 2b includes a tapered portion 5a whose cross-sectional area decreases toward the tip. The shape of the tapered portion 5a is a truncated cone. The tip of the tapered portion 5a is connected to the connection hole 2c. In the illustrated example, the second space 2b has the tapered portion 5a and a cylindrical portion 5b, the tip of the tapered portion 5a is connected to the connection hole 2c, and the rear end of the tapered portion 5a is connected to one end of the cylindrical portion 5b. In addition, the other end of the cylindrical portion 5b configures the second opening 4b. The cross-sectional area of the cylindrical portion 5b is larger than the cross-sectional area of the connection hole 2c.

The connection hole 2c connects the first space 2a and the second space 2b. The cross-sectional area of the connection hole 2c is smaller than the area of the first opening 4a. The cross-sectional area of the connection hole 2c is smaller than the area of the second opening 4b. For example, the connection hole 2c has a cylindrical shape, and the cross-sectional area of the connection hole 2c is the area of a face orthogonal to the central axis of the cylinder. The connection hole 2c serves as a flow path for supplying the liquid sample S from the second space 2b to the first space 2a. The cross-sectional area of the connection hole 2c corresponds to the cross-sectional area of the flow path. The connection hole 2c narrows the flow path of the liquid sample S from the second space 2b to the first space 2a. The connection hole 2c functions as an orifice.

The first opening 4a is located on the bottom side of the sample container 100, and the second opening 4b is located on the top side of the sample container 100. The first opening 4a is an opening at the bottom of the damper 14, and the second opening 4b is an opening at the top of the damper 14. The shape of the first opening 4a is, for example, a circle. The shape of the second opening 4b is, for example, a circle.

The diameter of the first opening 4a is, for example, approximately 20 mm. The diameter of the second opening 4b is, for example, smaller than the diameter of the first opening 4a. The diameter of the connection hole 2c is, for example, approximately 2 mm.

A groove 15 is provided around the damper 14. An O-ring 90 is attached to the groove 15. The O-ring 90 can seal a gap between the damper 14 and the sample cup 12. Note that the groove 15 may be made deeper to increase the compression allowance of the O-ring 90. Thereby, the tolerance for the size of a gap between the sample cup 12 and the damper 14 can be increased.

The analytical film 20 is a film that transmits X-rays. The analytical film 20 is an organic film such as a polypropylene film or a Mylar film. The thickness of the polypropylene film used as the analytical film 20 is, for example, approximately 4 µm. In addition, the thickness of the Mylar film used as the analytical film 20 is, for example, approximately 1.5 µm. The thickness and material of the analytical film 20 can be changed depending on the type of liquid sample S to be measured, an element to be measured, the purpose of measurement, the diameter of the sample cup 12, and the like.

The porous film 30 can be, for example, a polypropylene film, a nonwoven fabric, or the like. A film used as a separator for lithium ion batteries may be used as the porous film 30. By closing off the second opening 4b with the porous film 30, it is possible to prevent the liquid sample S from adhering to the second receptacle 50, and the like when the liquid sample S boils or splashes.

The porous film 30 is fixed to the second opening 4b of the damper 14 by a cap 80. For example, a female screw is formed on the inner surface of the cap 80, a male screw is formed on the outer surface of the damper 14, and the cap 80 is attached to the damper 14 by engaging the male screw with the female screw. At this time, by sandwiching the porous film 30 between the cap 80 and the damper 14, the porous film 30 can be fixed in a state in which the porous film 30 closes off the second opening 4b. In the cap 80, a through hole 82 that communicates with the second opening 4b is formed.

The protective receptacle 40 covers the analytical film 20. The protective receptacle 40 includes a protective cup 42 and a protective film 44. The protective cup 42 has a cylindrical shape. An opening at the bottom of the protective cup 42 is closed off by the protective film 44. The first opening 4a of the sample cup 12 closed off by the analytical film 20 is located inside the protective cup 42. For this reason, even when the analytical film 20 is damaged and the liquid sample S leaks out, the leaked liquid sample can be received by the protective receptacle 40.

The protective film 44 is a film that transmits X-rays. The material of the protective film 44 is, for example, the same as the material of the analytical film 20. Since the bottom of the protective receptacle 40 is configured with the protective film 44, primary X-rays pass through the protective film 44 and the analytical film 20 and are emitted onto the liquid sample S in the fluorescent X-ray analyzer. In addition, secondary X-rays pass through the analytical film 20 and the protective film 44 and are detected by a detector.

Although not shown in the drawing, the protective cup 42 has an air hole that serves as a gas path connecting the inside and outside of the protective cup 42. For this reason, in the sample chamber of the fluorescent X-ray analyzer, even when the sample chamber is evacuated and the pressure changes from atmospheric pressure to a vacuum state, the pressure inside the protective cup 42 and the pressure outside the protective cup 42 can be made the same. Thus, the possibility of the protective film 44 being damaged can be reduced.

The second receptacle 50 is provided with a pressure adjustment valve 60 that adjusts the pressure inside the space 2 within the first receptacle 10. The second receptacle 50 is also provided with a leak valve 70. The space 6 within the second receptacle 50 communicates with the space 2 within the first receptacle 10. In the sample container 100, the pressure in the space 2 within the first receptacle 10 is adjusted by adjusting the pressure in the space 6 within the second receptacle 50.

The second receptacle 50 is a sealable receptacle. The second receptacle 50 includes a base 52, a support member 54, and a lid 56.

The base 52 is provided with an opening 53 into which the first receptacle 10 can be inserted. An O-ring 92 is attached to the bottom of the opening 53, and the O-ring 92 airtightly seals a gap between the first receptacle 10 and the base 52. The space 6 within the second receptacle 50 is a space surrounded by the base 52 and the lid 56. A through hole 52a is provided at the bottom of the opening 53 of the base 52 to communicate with the space 6 surrounded by the base 52 and the lid 56.

The support member 54 supports the first receptacle 10. The support member 54 is attached to the base 52. For example, a female screw is formed on the inner surface of the base 52, a male screw is formed on the outer surface of the support member 54, and the support member 54 is attached to the base 52 by engaging the male screw with the female screw. At this time, the first receptacle 10 is supported from below by the support member 54, and the first receptacle 10 is pressed against the O-ring 92. Thereby, a gap between the first receptacle 10 and the base 52 can be airtightly sealed. In addition, a gap between the support member 54 and the first receptacle 10 is airtightly sealed by an O-ring 94.

An opening is provided at the bottom of the protective cup 42, and the support member 54 is inserted into the opening. The protective film 44 is sandwiched between the support member 54 and the protective cup 42. Thereby, the opening at the bottom of the protective cup 42 is closed off by the protective film 44. Thus, the protective film 44 is disposed under the analytical film 20. That is, the analytical film 20 overlaps the protective film 44.

A pressure adjustment valve 60 and a leak valve 70 are attached to the lid 56. In the sample chamber of the fluorescent X-ray analyzer in a vacuum atmosphere, the pressure adjustment valve 60 maintains the space 6 within the first receptacle 10 at a constant pressure. For example, the pressure inside the first receptacle 10 is maintained at 600 Pascals or more but less than atmospheric pressure.

The lid 56 is attached to the base 52. A gap between the base 52 and the lid 56 is airtightly sealed by an O-ring 96. The base 52 and the lid 56 form the space 6. The space 6 communicates with the second space 2b, the connection hole 2c, and the first space 2a via the through hole 52a and the through hole 82. For this reason, by adjusting the pressure in the space 6 within the second receptacle 50, the pressures in the first space 2a, the second space 2b, and the connection hole 2c can be adjusted.

The pressure adjustment valve 60 operates such that a pressure difference between the inside and outside of the second receptacle 50 in the sample chamber of the fluorescent X-ray analyzer in a vacuum atmosphere becomes a set pressure. Here, the pressure outside the second receptacle 50 is the pressure in the sample chamber.

The pressure adjustment valve 60 opens when the pressure in the space 6 within the second receptacle 50 is higher than the pressure outside the second receptacle 50 and a pressure difference between the inside and outside of the second receptacle 50 is higher than a set pressure. In addition, the pressure adjustment valve 60 closes when the pressure in the space 6 within the second receptacle 50 is higher than the pressure outside the second receptacle 50 and a pressure difference between the inside and outside of the second receptacle 50 is equal to or lower than the set pressure, and when the pressure inside the second receptacle 50 is equal to or lower than the pressure outside the second receptacle 50. The set pressure of the pressure adjustment valve 60 is variable.

In the sample chamber of the fluorescent X-ray analyzer in a vacuum atmosphere, the pressure in the space 6 within the second receptacle 50 is maintained at a constant pressure by the pressure adjustment valve 60. Thus, the pressure in the space 2 within the first receptacle 10 is also constant. For example, the pressure in the space 2 within the first receptacle 10 is maintained at 600 Pascals or more and less than atmospheric pressure.

The leak valve 70 is a valve for returning the pressure inside the second receptacle 50 to atmospheric pressure. The leak valve 70 opens, for example, when the pressure outside the second receptacle 50 is higher than the pressure inside the second receptacle 50. In addition, the leak valve 70 closes, for example, when the pressure outside the first receptacle 10 is equal to or lower than the pressure inside the first receptacle 10.

FIG. 3 is a diagram illustrating the pressure adjustment valve 60. The pressure adjustment valve 60 includes a valve 62 and a spring 64. The pressure adjustment valve 60 adjusts the pressure inside the second receptacle 50 using the valve 62 and the spring 64.

When both the inside and outside of the second receptacle 50 are at atmospheric pressure, the valve 62 of the pressure adjustment valve 60 is closed by a force F2 of the spring 64. When the sample chamber of the fluorescent X-ray analyzer is evacuated to reduce the pressure outside the second receptacle 50, the pressure inside the second receptacle 50 becomes higher than the pressure outside the second receptacle 50, and a pressure difference between the inside and outside of the second receptacle 50 becomes higher than a set pressure, a force F4 applied to the valve 62 due to the pressure difference between the inside and outside of the second receptacle 50 becomes greater than a force F2 with which the spring 64 closes the valve 62. Thereby, the valve 62 opens, thereby connecting the inside and outside of the second receptacle 50.

When the pressure in the space 6 within the second receptacle 50 decreases as a result of the valve 62 opening, and a pressure difference between the inside and outside of the second receptacle 50 falls equal to or less than the set pressure, the force F2 with which the spring 64 closes the valve 62 becomes greater than a force F4 applied to the valve 62 due to the pressure difference between the inside and outside of the second receptacle 50. Thereby, the valve 62 is closed.

In this manner, the valve 62 is opened and closed in accordance with the pressure difference between the inside and outside of the second receptacle 50, and thus the pressure in the space 6 within the second receptacle 50 can be made constant. The set pressure can also be changed by changing the length of the spring 64 to adjust the force F2 with which the spring 64 closes the valve 62.

Although not shown in the drawing, when the pressure in the space 6 within the second receptacle 50 is equal to or less than the pressure outside the second receptacle 50, the force F4 applied to the valve 62 due to the pressure difference between the inside and outside of the second receptacle 50 becomes a force that closes the valve 62, and thus the valve 62 is in a closed state.

The leak valve 70 has, for example, a configuration similar to that of the pressure adjustment valve 60, and is opened and closed in response to a pressure difference between the inside and outside of the second receptacle 50 using a spring.

### 1.2. Fluorescent X-ray Analyzer

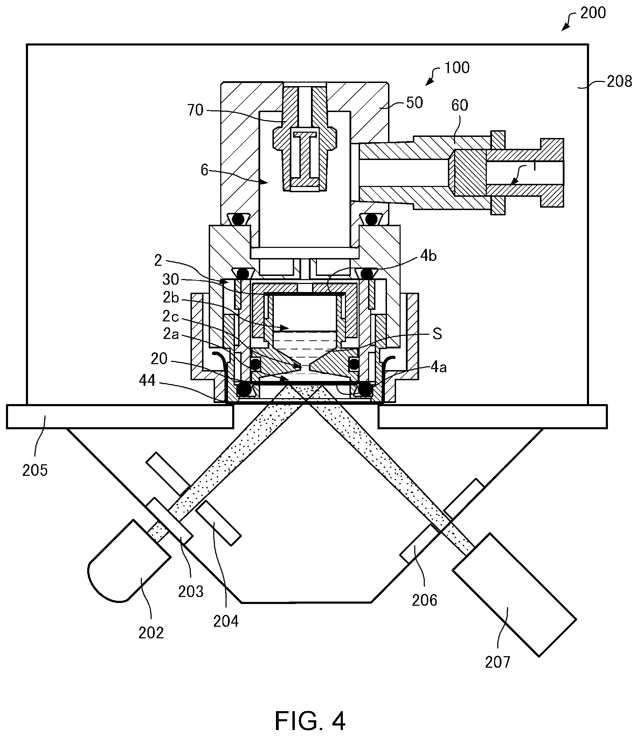

FIG. 4 is a diagram illustrating an example of the configuration of a fluorescent X-ray analyzer 200.

The fluorescent X-ray analyzer 200 is a device for performing analysis by a fluorescent X-ray analysis method. The fluorescent X-ray analysis method is a method for analyzing a liquid sample S by irradiating the liquid sample S with primary X-rays and detecting secondary X-rays emitted from the liquid sample S by the irradiation with the primary X-rays.

As illustrated in FIG. 4, the fluorescent X-ray analyzer 200 includes a sample container 100, an X-ray tube 202, a filter 203, a primary X-ray collimator 204, a support plate 205, a secondary X-ray collimator 206, and a detector 207.

The sample container 100 is accommodated in a sample chamber 208 of the fluorescent X-ray analyzer 200. The sample chamber 208 accommodates, for example, the filter 203, the primary X-ray collimator 204, the support plate 205, and the secondary X-ray collimator 206. Note that the sample chamber 208 may accommodate the X-ray tube 202 and the detector 207. Although not shown in the drawing, the fluorescent X-ray analyzer 200 includes a vacuum pump for evacuating the sample chamber 208.

When the liquid sample S is measured using the sample container 100, the sample chamber 208 is placed in a vacuum atmosphere of a predetermined pressure. During the measurement, the sample chamber 208 is maintained at a constant pressure by a vacuum pump. In the sample chamber 208 in a vacuum atmosphere, the inside of the first receptacle 10 is maintained at a pressure higher than the pressure (predetermined pressure) of the sample chamber 208. In the sample chamber 208 in a vacuum atmosphere, the inside of the first receptacle 10 is maintained by the pressure adjustment valve 60 at a pressure higher than the pressure at which the liquid sample S boils and lower than the pressure at which the analytical film 20 is damaged.

The X-ray tube 202 generates primary X-rays. In the X-ray tube 202, a tube voltage and a tube current are set in accordance with the material of the liquid sample S and the element to be analyzed. The tube voltage is a voltage applied to the X-ray tube 202. The tube current is a current passed through the X-ray tube 202.

The filter 203 transmits the X-rays generated by the X-ray tube 202. By irradiating the liquid sample S with X-rays through the filter 203, the filter 203 can absorb a portion of the continuous X-rays and characteristic X-rays, and these components can be removed. Thereby, for example, a peak-to-background ratio (P/B ratio) can be improved. The fluorescent X-ray analyzer 200 includes a plurality of filters 203, and the plurality of filters 203 have different energy bands that can be reduced. The filter 203 to be used for measurement is selected from among the plurality of filters 203 depending on an element to be measured.

The primary X-ray collimator 204 limits an irradiation region of X-rays emitted onto the liquid sample S. The size of the irradiation region can be selected by the primary X-ray collimator 204. The size of the irradiation region is selected depending on the area of the first opening 4a. The area of the irradiation region can be increased by increasing the area of the first opening 4a. Thereby, the sensitivity of the measurement can be increased.

The support plate 205 supports the sample container 100. An opening is formed in the support plate 205, and primary X-rays are emitted onto the sample container 100 through the opening. The primary X-rays pass through the protective film 44 and the analytical film 20 and are emitted onto the liquid sample S. When the liquid sample S is irradiated with the primary X-rays, secondary X-rays are emitted from the liquid sample S. The secondary X-rays emitted from the liquid sample S pass through the analytical film 20 and the protective film 44 and are emitted through the opening of the support plate 205.

The secondary X-ray collimator 206 limits an acquisition region of the secondary X-rays emitted from the liquid sample S. By using the secondary X-ray collimator 206, desired secondary X-rays can be detected efficiently. Here, the secondary X-rays refer to X-rays emitted from a sample when the sample is irradiated with primary X-rays. The secondary X-rays include fluorescent X-rays and scattered X-rays. The scattered X-rays are X-rays emitted due to scattering of atoms and electrons when a sample is irradiated with primary X-rays. The fluorescent X-rays are X-rays emitted when a sample is irradiated with primary X-rays, exciting inner-shell electrons of atoms and causing outer-shell electrons to move into a vacancy resulting from the excitation of the inner-shell electrons.

The detector 207 detects secondary X-rays emitted from the liquid sample S. The detector 207 is, for example, a semiconductor detector. The detector 207 is, for example, an energy-dispersive X-ray detector. The detector 207 may also be a wavelength dispersive X-ray detector.

In the fluorescent X-ray analyzer 200, the sample chamber 208 is in a vacuum atmosphere, and thus light elements in the liquid sample S can be detected with high sensitivity.

### 1.3. Measurement Method

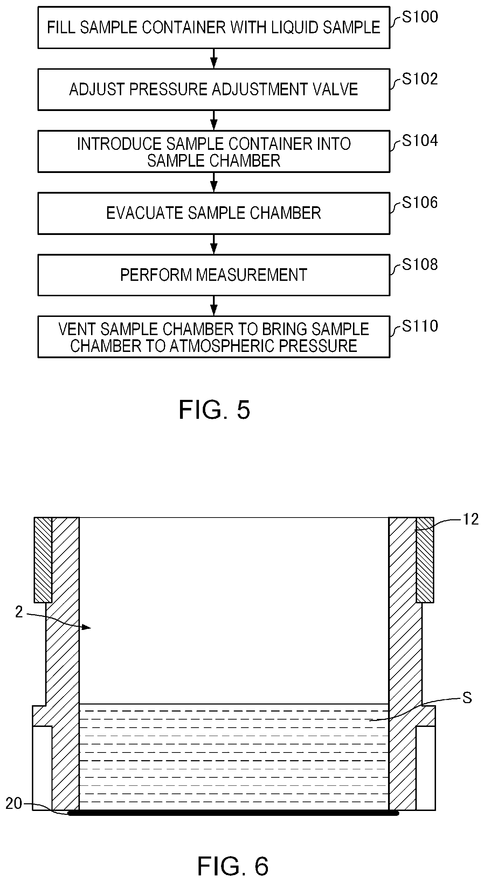

FIG. 5 is a flowchart illustrating an example of a measurement method using the sample container 100. FIGS. 6 to 10 are diagrams illustrating each step of the measurement method using the sample container 100.

First, the sample container 100 is filled with the liquid sample S (step S100).

For example, from among a plurality of sample cups 12 with different diameters, an optimal sample cup 12 is selected in accordance with the type of liquid sample S to be measured, an element to be measured, the purpose of the measurement, and the like. Next, an optimal analytical film 20 is selected in accordance with the type of liquid sample S to be measured, an element to be measured, the purpose of the measurement, the diameter of the sample cup 12, and the like.

Next, as illustrated in FIG. 6, the analytical film 20 is attached to the sample cup 12, and the bottom of the sample cup 12 is sealed with the analytical film 20. Next, the liquid sample S is poured into the sample cup 12.

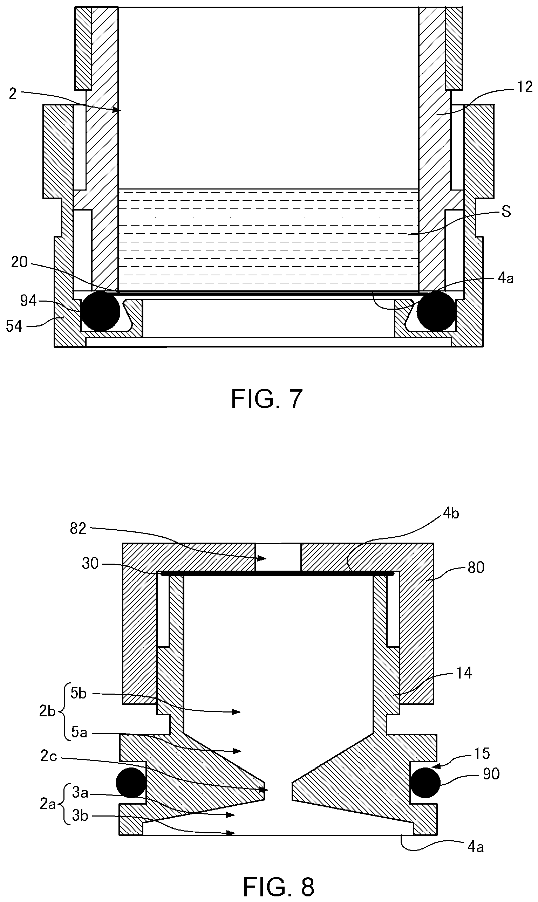

Next, as illustrated in FIG. 7, a support member 54 is attached to the sample cup 12.

Next, as illustrated in FIG. 8, the damper 14 is prepared. First, the O-ring 90 is attached to a groove 15 of the damper 14. Next, the second opening 4b of the damper 14 is closed off with the porous film 30. Specifically, the porous film 30 is placed on the second opening 4b of the damper 14, and the cap 80 is attached to the damper 14 with the porous film 30 sandwiched between the cap 80 and the damper 14. Thereby, the second opening 4b is closed off with the porous film 30.

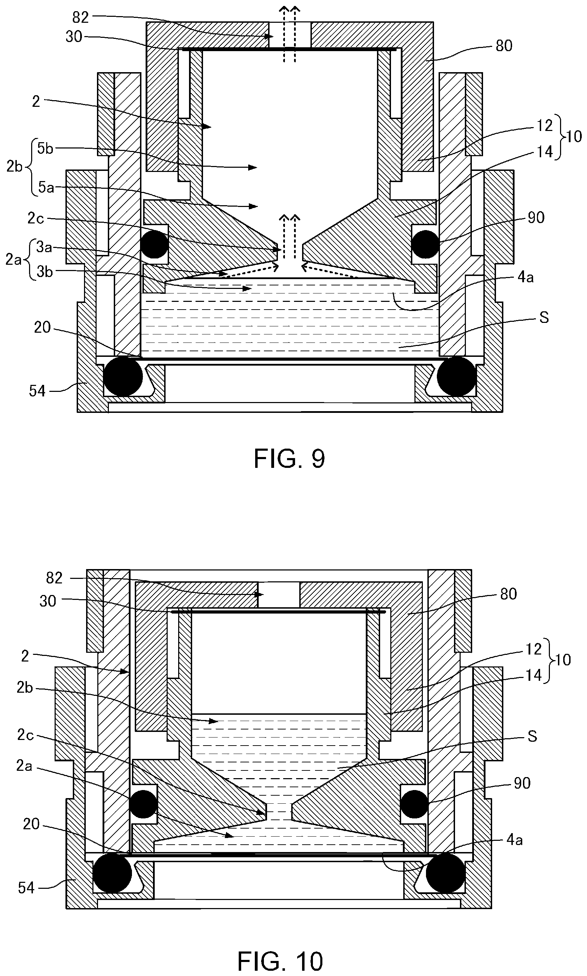

Next, as illustrated in FIG. 9, the damper 14 is placed in the sample cup 12 filled with the liquid sample S. When the damper 14 is pushed into the sample cup 12 from the opening at the top, the liquid sample S and the gas in the sample cup 12 flow into the first space 2a from the first opening 4a of the damper 14. Further, when the damper 14 is pushed into the sample cup 12, the liquid sample S and the gas that have flowed into the first space 2a flow into the second space 2b through the connection hole 2c. At this time, the liquid sample S and the gas in the first space 2a are collected in the connection hole 2c by the tapered portion 3a. For this reason, it is possible to reduce the possibility of air bubbles remaining in the first space 2a. When the damper 14 is pushed into the sample cup 12, portion of the gas that was guided into the second space 2b is discharged to the outside of the sample container 100 through the porous film 30.

As illustrated in FIG. 10, the damper 14 is pushed in until it comes into contact with the bottom of the sample cup 12, that is, the analytical film 20. Thereby, the first opening 4a is closed off by the analytical film 20. Furthermore, the first space 2a is filled with the liquid sample S, and the second space 2b is filled with the liquid sample S for buffering. By pushing the damper 14 into the sample cup 12 in this manner, the space 2 within the sample cup 12 can be partitioned into the first space 2a, the second space 2b, and the connection hole 2c.

Next, as illustrated in FIG. 1, the second receptacle 50 is attached to the first receptacle 10. Thereby, the space 2 within the first receptacle 10 and the space 6 within the second receptacle 50 communicate with each other through the through hole 52a of the base 52.

In this manner, the sample container 100 can be filled with the liquid sample S. In the above, the damper 14 is pushed into the sample cup 12 after the liquid sample S is placed in the sample cup 12, but the liquid sample S may be placed in the sample cup 12 after the damper 14 is placed in the sample cup 12.

Next, the pressure adjustment valve 60 is adjusted (step S102).

The set pressure of the pressure adjustment valve 60 is set such that the pressure inside the first receptacle 10 is higher than the pressure at which the liquid sample S boils and lower than the pressure at which the analytical film 20 is damaged in the sample chamber 208 which is a vacuum atmosphere of a predetermined pressure. Thus, the set pressure is set in accordance with the vapor pressure of the liquid sample S, the area of the first opening 4a, the pressure of the sample chamber 208, and the like.

Next, the sample container 100 containing the liquid sample S is introduced into the sample chamber 208 of the fluorescent X-ray analyzer 200 (step S104). Although not shown in the drawing, the lid of the sample chamber is opened and the sample container 100 is introduced into the sample chamber 208.

Next, the sample chamber 208 is evacuated to place the sample chamber 208 in a vacuum atmosphere of a predetermined pressure (step S106).

The sample chamber 208 is evacuated to a pressure (predetermined pressure) at which X-rays of light elements emitted from the liquid sample S can be detected by the detector 207. At this time, the pressure inside the first receptacle 10 also decreases as the pressure inside the sample chamber 208 decreases, but a pressure difference between the inside of the first receptacle 10 and the sample chamber 208 is maintained at a set pressure by the operation of the pressure adjustment valve 60. The pressure inside the first receptacle 10 is maintained at a pressure higher than the pressure at which the liquid sample S boils and lower than the pressure at which the analytical film 20 is damaged.

Next, the liquid sample S is measured by a fluorescent X-ray analysis method (step S108).

When the pressure inside the sample chamber 208 becomes constant at a predetermined pressure, the measurement is started. Specifically, primary X-rays generated by the X-ray tube 202 are emitted onto the liquid sample S in the first receptacle 10 via the filter 203 and the primary X-ray collimator 204. The primary X-rays penetrate the protective film 44 and the analytical film 20 and are emitted onto the liquid sample S. Secondary X-rays emitted from the liquid sample S as a result of the primary X-rays being emitted onto the liquid sample S penetrate the analytical film 20 and the protective film 44 and are detected by the detector 207 via the secondary X-ray collimator 206.

As described above, the pressure inside the first receptacle 10 is higher than the pressure at which the liquid sample S boils, and thus the liquid sample S can be measured without boiling. Furthermore, the pressure inside the first receptacle 10 is lower than the pressure at which the analytical film 20 is damaged, and thus the possibility of the analytical film 20 being damaged can be reduced. Furthermore, since the sample chamber 208 can be placed in a vacuum atmosphere, the attenuation of secondary X-rays emitted from the liquid sample S can be reduced. Thus, for example, light elements can be measured with high sensitivity.

After the measurement is completed, the sample chamber 208 is vented to bring the sample chamber 208 to atmospheric pressure (step S110).

Venting the sample chamber 208 increases the pressure in the sample chamber 208, and the pressure inside the first receptacle 10 also increases due to the operation of the leak valve 70. As a result, damage to the analytical film 20 can be prevented, and the pressure inside the first receptacle 10 can be brought to atmospheric pressure.

Through the above steps, the liquid sample S can be measured.

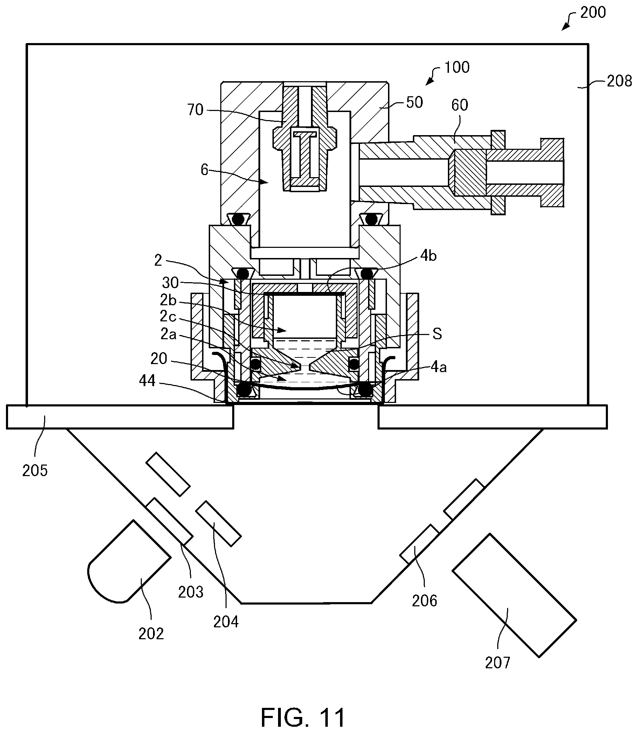

FIG. 11 is a diagram schematically illustrating the state of the sample container 100 in the sample chamber 208 which is in a vacuum state.

The sample chamber 208 is in a vacuum state, and the first receptacle 10 is in a low vacuum state in which the pressure inside the first receptacle 10 is higher than the pressure inside the sample chamber 208. For this reason, the analytical film 20 expands outward due to a pressure difference between the inside of the first receptacle 10 and the sample chamber 208. The outward expansion of the analytical film 20 increases the volume of the first space 2a. At this time, the liquid sample S accommodated in the second space 2b flows into the first space 2a through the connection hole 2c. In this manner, in the sample container 100, when the analytical film 20 expands and the volume of the first space 2a increases, the liquid sample S can be supplied from the second space 2b to the first space 2a. Thus, in the sample container 100, even when the volume of the first space 2a changes, the first space 2a can be filled with the amount of liquid sample S required for measurement.

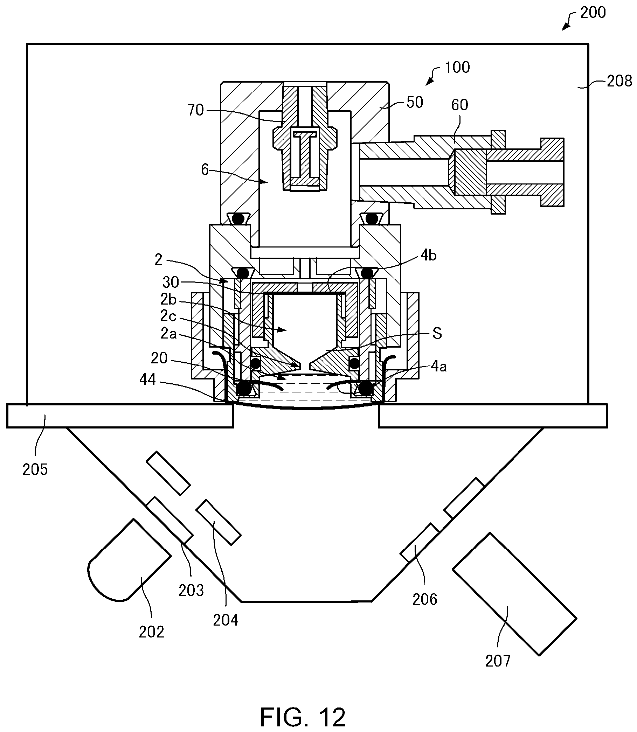

FIG. 12 is a diagram for explaining the fluorescent X-ray analyzer 200 in a state in which the analytical film 20 is damaged.

As illustrated in FIG. 12, even when the analytical film 20 is damaged due to a pressure difference between the inside of the first receptacle 10 and the sample chamber 208, the liquid sample S can be received in the protective receptacle 40. Thus, even when the analytical film 20 is damaged, the liquid sample S can be prevented from flowing out of the sample container 100.

Furthermore, in the sample container 100, when the analytical film 20 is damaged, the liquid sample S and gas in the sample container 100 are forcefully ejected due to the pressure difference between the inside of the first receptacle 10 and the sample chamber 208, and thus it is possible to reduce the possibility of the protective film 44 being damaged.

In the sample container 100, the liquid sample S and gas in the second space 2b flow into the first space 2a through the connection hole 2c. Since the connection hole 2c narrows a flow path of the liquid sample S and gas flowing from the second space 2b to the first space 2a, the flow rate of the liquid sample S and gas flowing from the second space 2b to the first space 2a can be restricted by the connection hole 2c. Thus, when the analytical film 20 is damaged, it is possible to prevent the liquid sample S and gas in the second space 2b from forcefully flowing into the first space 2a due to the pressure difference between the inside of the first receptacle 10 and the sample chamber 208. Thereby, it is possible to reduce the possibility of the protective film 44 being damaged when the analytical film 20 is damaged.

### 1.4. Effects

The sample container 100 includes the first receptacle 10 that contains the liquid sample S and includes the first opening 4a and the second opening 4b, the analytical film 20 that closes off the first opening 4a and transmits X-rays, the protective receptacle 40 that includes the protective film 44 that transmits X-rays and covers the analytical film 20, and the pressure adjustment valve 60 that adjusts the pressure inside the first receptacle 10. Further, in the sample container 100, the first receptacle 10 includes the first space 2a facing the first opening 4a, the second space 2b facing the second opening 4b, and the connection hole 2c that connects the first space 2a and the second space 2b. Further, in the sample container 100, the cross-sectional area of the connection hole 2c is smaller than the area of the first opening 4a.

In this manner, in the sample container 100, the cross-sectional area of the connection hole 2c is smaller than the area of the first opening 4a. For this reason, in the sample container 100, the flow rate of the liquid sample S and gas flowing from the second space 2b to the first space 2a can be restricted, for example, compared to when the cross-sectional area of the connection hole 2c is equal to or greater than the area of the first opening 4a. Thus, in the sample container 100, it is possible to reduce the possibility of the protective film 44 being damaged when the analytical film 20 is damaged. Thereby, the liquid sample S can be measured safely in the fluorescent X-ray analyzer.

Further, in the sample container 100, the second space 2b functions as a buffer tank that accommodates the liquid sample S to be supplied to the first space 2a. For example, in the sample container 100, as illustrated in FIG. 10, when the analytical film 20 expands due to a pressure difference between the inside of the first receptacle 10 and the sample chamber 208 and the volume of the first space 2a increases, the liquid sample S is supplied from the second space 2b to the first space 2a. Thereby, it is possible to reduce the possibility that air bubbles will enter the first space 2a or that the liquid sample S will be insufficient in the first space 2a.

In the sample container 100, the cross-sectional area of the connection hole 2c is smaller than the area of the second opening 4b. For this reason, in the sample container 100, the volume of the second space 2b facing the second opening 4b can be increased. Thus, in the sample container 100, it is possible to increase the capacity of the buffer tank that accommodates the liquid sample S to be supplied to the first space 2a. Furthermore, in the sample container 100, the flow rate of the liquid sample S and gas flowing from the second space 2b to the first space 2a can be restricted.

In the sample container 100, the connection hole 2c narrows the flow path of the liquid sample S flowing from the second space 2b to the first space 2a. For this reason, in the sample container 100, the flow rate of the liquid sample S and gas flowing from the second space 2b to the first space 2a can be restricted by the connection hole 2c.

In the sample container 100, the first space 2a includes the tapered portion 3a whose cross-sectional area decreases toward the tip, and the tip of the tapered portion 3a is connected to the connection hole 2c. For this reason, in the sample container 100, it is possible to reduce the possibility of air bubbles entering the first space 2a.

In the sample container 100, the volume of the second space 2b is larger than the volume of the first space 2a. For this reason, in the sample container 100, the capacity of the buffer tank that accommodates the liquid sample S to be supplied to the first space 2a can be increased.

The sample container 100 includes the porous film 30 that closes off the second opening 4b. For this reason, in the sample container 100, the second opening 4b is closed off by the porous film 30, and thus it is possible to prevent the liquid sample S from adhering to the second receptacle 50 and the like when the liquid sample S boils or splashes.

In the sample container 100, the pressure adjustment valve 60 makes a pressure difference between the inside and outside of the first receptacle 10 constant in a vacuum atmosphere. Thus, in the sample container 100, it is possible to reduce the possibility of the analytical film 20 being damaged.

In the sample container 100, the pressure adjustment valve 60 is opened when the pressure inside the first receptacle 10 is greater than the pressure outside and a pressure difference between the inside and outside of the first receptacle 10 is greater than a set pressure, the pressure adjustment valve 60 is closed when the pressure inside the first receptacle 10 is greater than the pressure outside and the pressure difference between the inside and outside of the first receptacle 10 is equal to or less than the set pressure, and the set pressure is variable. For this reason, in the sample container 100, the set pressure can be changed depending on the diameter of the first opening 4a and the strength (thickness and material) of the analytical film 20. Thus, in the sample container 100, measurements can be performed using the first receptacles 10 having various diameters and various types of analytical films 20.

The sample container 100 includes the second receptacle 50 provided with the pressure adjustment valve 60, and the space 6 within the second receptacle 50 communicates with the space 2 within the first receptacle 10. For this reason, in the sample container 100, the pressure in the space 2 within the first receptacle 10 can be adjusted by adjusting the pressure in the space 6 within the second receptacle 50.

The fluorescent X-ray analyzer 200 includes the sample container 100 and the sample chamber 208 that can accommodate the sample container 100 and can be maintained in a vacuum atmosphere. Further, in the fluorescent X-ray analyzer 200, measurement is performed by irradiating the liquid sample S accommodated in the sample container 100 with X-rays in the sample chamber 208 in a vacuum atmosphere. In the sample container 100, the pressure inside the first receptacle 10 can be adjusted using the pressure adjustment valve 60, and thus in the sample chamber 208 in a vacuum atmosphere, the pressure inside the first receptacle 10 can be maintained at a pressure higher than the pressure at which the liquid sample S boils and lower than the pressure at which the analytical film 20 is damaged. Thus, the fluorescent X-ray analyzer 200 can perform measurement with the sample chamber 208 in a vacuum atmosphere by using the sample container 100. Thereby, light elements in the liquid sample S can be measured without replacing the sample chamber 208 with helium.

A measurement method using the sample container 100 includes a step of accommodating the liquid sample S in the sample container 100, a step of introducing the sample container 100 into the sample chamber 208 of the fluorescent X-ray analyzer 200, a step of reducing the pressure in the sample chamber 208 to place the sample chamber 208 in a vacuum atmosphere, and a step of irradiating the liquid sample S accommodated in the sample container 100 with X-rays through the analytical film 20 and the protective film 44 in the sample chamber 208 in a vacuum atmosphere and detecting fluorescent X-rays emitted from the liquid sample S. For this reason, in the measurement method using the sample container 100, the sample chamber 208 can be placed in a vacuum atmosphere for measurement. Furthermore, by using the sample container 100, it is possible to reduce the possibility of the protective film 44 being damaged when the analytical film 20 is damaged due to a pressure difference between the inside of the first receptacle 10 and the sample chamber 208.

In the measurement method using the sample container 100, the step of accommodating the liquid sample S in the sample container 100 includes a step of placing the liquid sample S into the sample cup 12 and a step of placing the damper 14 into the sample cup 12 containing the liquid sample S to partition the space 2 within the sample cup 12 into the first space 2a, the second space 2b, and the connection hole 2c. For this reason, in the sample container 100, the liquid sample S can be easily filled into the sample container 100 that has the first space 2a, the second space 2b, and the connection hole 2c.

For example, when placing the liquid sample S in the sample container having the first space 2a, the second space 2b, and the connection hole 2c, it is difficult to fill the first space 2a with the liquid sample S because the connection hole 2c is narrowed. Furthermore, since the connection hole 2c is narrowed, air bubbles are likely to enter the first space 2a. On the other hand, the above-described problems do not occur when the damper 14 is placed after the liquid sample S is placed in the liquid sample S.

### 2. Second Embodiment

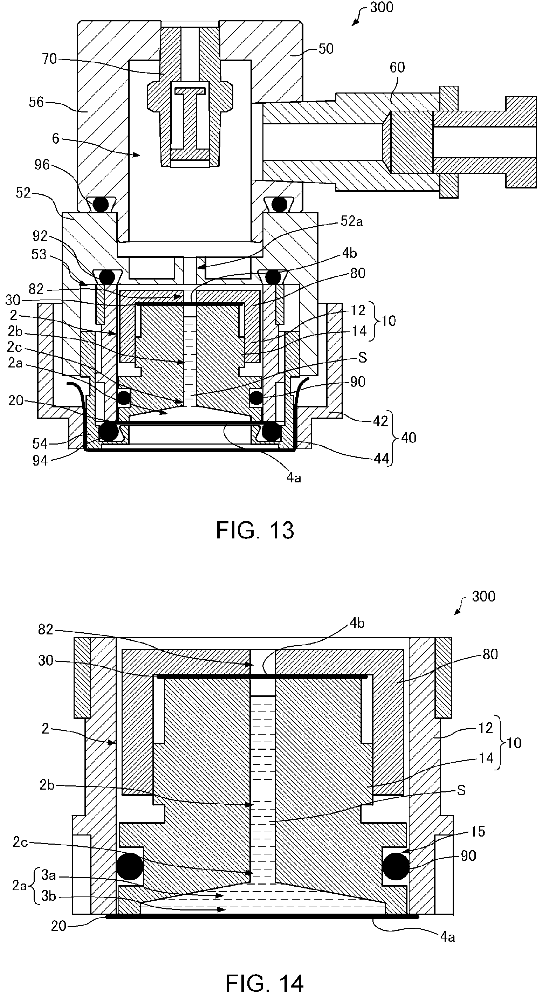

Next, a sample container according to a second embodiment will be described with reference to the drawings. FIG. 13 is a cross-sectional view schematically illustrating a sample container 300 according to the second embodiment. FIG. 14 is a cross-sectional view schematically illustrating a first receptacle 10 of the sample container 300. Hereinafter, in the sample container 300 according to the second embodiment, members having functions similar to those of the components of the sample container 100 according to the first embodiment are given the same reference numerals, and detailed descriptions thereof will be omitted.

In the sample container 100 described above, the connection hole 2c narrows the flow path of the liquid sample S flowing from the second space 2b to the first space 2a. In the sample container 100, the cross-sectional area of the connection hole 2c is smaller than the area of the second opening 4b.

On the other hand, in the sample container 300, the cross-sectional area of the connection hole 2c is the same as the area of the second opening 4b. In the sample container 300, the diameter of the connection hole 2c is the same as the diameter of the second space 2b, and the connection hole 2c does not narrow the flow path of the liquid sample S flowing from the second space 2b to the first space 2a.

Similarly to the sample container 100, in the sample container 300, the cross-sectional area of the connection hole 2c is smaller than the area of the first opening 4a. For this reason, similarly to the sample container 100, in the sample container 300, the flow rate of the liquid sample S and gas flowing from the second space 2b to the first space 2a can be restricted compared to, for example, when the cross-sectional area of the connection hole 2c is equal to or larger than the area of the first opening 4a. Thus, similarly to the sample container 100, in the sample container 300, it is possible to reduce the possibility of the protective film 44 being damaged when the analytical film 20 is damaged.

A measurement method using the sample container 300 is similar to the measurement method using the sample container 100, and a description thereof will be omitted.

The sample container 300 can achieve the same operational effects as those of the sample container 100.

### 3. Third Embodiment

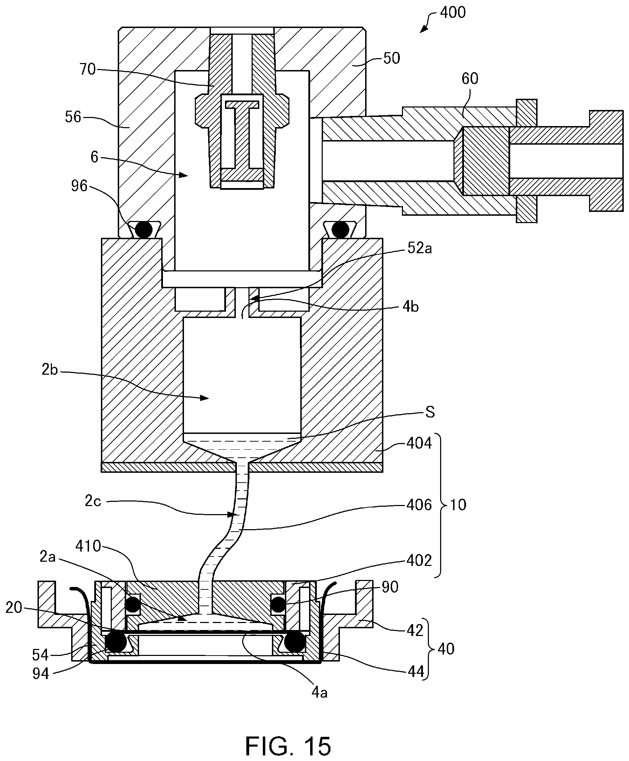

Next, a sample container according to a third embodiment will be described with reference to the drawings. FIG. 15 is a cross-sectional view schematically illustrating a sample container 400 according to the third embodiment. Hereinafter, in the sample container 400 according to the third embodiment, members having functions similar to those of the components of the sample container 100 according to the first embodiment are given the same reference numerals, and detailed descriptions thereof will be omitted.

As illustrated in FIGS. 1 and 2, in the sample container 100, the first receptacle 10 includes the sample cup 12 and the damper 14, and the first space 2a, the second space 2b, and the connection hole 2c are formed by partitioning the space in the sample cup 12 by the damper 14.

On the other hand, in the sample container 400, as illustrated in FIG. 15, the first receptacle 10 includes a sample cup 402 having a first space 2a, a buffer tank 404 having a second space 2b, and a tube 406 having a connection hole 2c that connects the sample cup 402 and the buffer tank 404.

A fixing member 410 for fixing the tube 406 is accommodated in the sample cup 402. The first space 2a is formed by placing the fixing member 410 in the sample cup 402. The buffer tank 404 is disposed outside the sample cup 402. That is, the second space 2b is a space outside the sample cup 402. The space within the buffer tank 404 communicates with the space 6 within the second receptacle 50.

A measurement method using the sample container 400 is similar to the measurement method using the sample container 100, and a description thereof will be omitted.

The sample container 400 can achieve the same operational effects as those of the sample container 100.

### 4. Modification Example

Note that the present invention is not limited to the above-described embodiments, and various modifications can be made within the scope of the present invention.

### 4.1. First Modification Example

In the first embodiment described above, the first receptacle 10 includes the sample cup 12 and the damper 14, and the first space 2a, the second space 2b, and the connection hole 2c are formed in the sample cup 12 by placing the damper 14 in the sample cup 12. On the other hand, for example, the sample cup 12 and the damper 14 may be configured as one unit. The same applies to the sample container 300 according to the second embodiment, and the sample cup 12 and the damper 14 may be configured as one unit in the sample container 300.

### 4.2. Second Modification Example

In the sample container 100 according to the first embodiment, as illustrated in FIG. 3, the pressure adjustment valve 60 makes the pressure in the space 6 within the second receptacle 50 constant by opening and closing the valve 62 in accordance with a pressure difference between the inside and outside of the second receptacle 50 using the spring 64, but the configuration of the pressure adjustment valve 60 is not limited thereto. Although not shown in the drawing, for example, the pressure adjustment valve 60 may open and close the valve 62 in accordance with a pressure difference between the inside and outside of the second receptacle 50 by using a weight instead of the spring 64. For example, by using a weight to apply a force to the valve to close the valve, the pressure adjustment valve 60 can be operated in the same manner as when the spring 64 is used.

Note that the embodiments and the modification examples described above are merely examples and the present invention is not limited thereto. For example, the respective embodiments and the respective modifications may be combined as deemed appropriate.

The invention is not limited to the above-described embodiments, and various modifications can be made. For example, the invention includes configurations that are substantially the same as the configurations described in the embodiments. Substantially same configurations mean configurations having the same functions and methods, for example. The invention also includes configurations obtained by replacing non-essential elements of the configurations described in the embodiments with other elements. The invention further includes configurations obtained by adding known art to the configurations described in the embodiments.

## Claims

1. A sample container for a fluorescent X-ray analyzer, the sample container comprising:
a first receptacle that accommodates a liquid sample and has a first opening and a second opening;
an analytical film that closes off the first opening and transmits X-rays;
a protective receptacle that includes a protective film for transmitting X-rays and covers the analytical film; and
a pressure adjustment valve that adjusts a pressure inside the first receptacle,
wherein the first receptacle has a first space facing the first opening, a second space facing the second opening, and a connection hole connecting the first space and the second space, and
wherein a cross-sectional area of the connection hole is smaller than an area of the first opening.

2. The sample container according to claim 1,
wherein the cross-sectional area of the connection hole is smaller than an area of the second opening.

3. The sample container according to claim 1 or 2,
wherein the connection hole narrows a flow path of the liquid sample flowing from the second space to the first space.

4. The sample container according to any one of claims 1 to 3,
wherein the first space has a tapered portion whose cross-sectional area decreases toward a tip, and
the tip of the tapered portion is connected to the connection hole.

5. The sample container according to any one of claims 1 to 4,
wherein the first receptacle includes:
a sample cup; and
a partition member that partitions a space in the sample cup into the first space, the second space, and the connection hole.

6. The sample container according to any one of claims 1 to 5,
wherein a volume of the second space is larger than a volume of the first space.

7. The sample container according to any one of claims 1 to 6, further comprising
a porous film that closes off the second opening.

8. The sample container according to any one of claims 1 to 7,
wherein the pressure adjustment valve makes a pressure difference between an inside and an outside of the first receptacle constant in a vacuum atmosphere.

9. The sample container according to any one of claims 1 to 8,
wherein the pressure adjustment valve
opens when the pressure inside the first receptacle is greater than a pressure outside the first receptacle and the pressure difference between the inside and the outside of the first receptacle is greater than a set pressure, and
closes when the pressure inside the first receptacle is greater than the pressure outside the first receptacle and the pressure difference between the inside and the outside of the first receptacle is equal to or less than the set pressure, and
wherein the set pressure is variable.

10. The sample container according to any one of claims 1 to 9, further comprising
a second receptacle provided with the pressure adjustment valve,
wherein a space within the second receptacle communicates with a space within the first receptacle.

11. A fluorescent X-ray analyzer comprising:
the sample container according to any one of claims 1 to 10; and
a sample chamber that accommodates the sample container and is able to be maintained in a vacuum atmosphere,
wherein measurement is performed by irradiating the liquid sample accommodated in the sample container with X-rays in the sample chamber in a vacuum atmosphere.

12. A measurement method using a sample container including
a first receptacle that accommodates a liquid sample and has a first opening and a second opening,
an analytical film that closes off the first opening and transmits X-rays,
a protective receptacle that includes a protective film for transmitting X-rays and covers the analytical film, and
a pressure adjustment valve that adjusts a pressure inside the first receptacle,
wherein the first receptacle has a first space facing the first opening, a second space facing the second opening, and a connection hole connecting the first space and the second space, and
wherein a cross-sectional area of the connection hole is smaller than an area of the first opening, the measurement method comprising:
accommodating the liquid sample in the sample container;
introducing the sample container into a sample chamber of a fluorescent X-ray analyzer;
reducing a pressure in the sample chamber to place the sample chamber in a vacuum atmosphere; and
irradiating the liquid sample accommodated in the sample container with X-rays through the analytical film and the protective film in the sample chamber in a vacuum atmosphere, and detecting fluorescent X-rays emitted from the liquid sample.

13. The measurement method according to claim 12,
wherein the first receptacle includes:
a sample cup; and
a partition member that partitions a space in the sample cup into the first space, the second space, and the connection hole, and
wherein the accommodating the liquid sample in the sample container includes:
placing the liquid sample in the sample cup; and
placing the partition member in the sample cup containing the liquid sample to partition the space in the sample cup into the first space, the second space, and the connection hole.
